## Europäisches Patentamt
## European Patent Office
## Office européen des brevets

(19)

(11) Veröffentlichungsnummer: **0 062 901**
**A2**

(12) **EUROPÄISCHE PATENTANMELDUNG**

(21) Anmeldenummer: 82103015.2

(22) Anmeldetag: 08.04.82

(51) Int. Cl.³: **C 08 F 279/02**
**C 08 F 265/04, C 08 F 2/22**

(30) Priorität: 13.04.81 DE 3114875

(43) Veröffentlichungstag der Anmeldung:
20.10.82 Patentblatt 82/42

(84) Benannte Vertragsstaaten:
**BE DE FR GB IT NL**

(71) Anmelder: BASF Aktiengesellschaft
Carl-Bosch-Strasse 38
D-6700 Ludwigshafen(DE)

(72) Erfinder: Mc Kee, Graham Edmund, Dr.
Kastanienweg 8
D-6940 Weinheim(DE)

(72) Erfinder: Brandstetter, Franz, Dr.
Ritterbuechel 45
D-6730 Neustadt(DE)

(72) Erfinder: Echte, Adolf, Dr.
Leuschnerstrasse 42
D-6700 Ludwigshafen(DE)

(72) Erfinder: Hambrecht, Juergen, Dr.
Werderstrasse 30
D-6900 Heidelberg(DE)

(72) Erfinder: Overhoff, Heinz-Juergen, Dr.
Max-Slevogt-Strasse 13B
D-6710 Frankenthal(DE)

(72) Erfinder: Priebe, Edmund, Dr.
Bensheimer Ring 7A
D-6710 Frankenthal(DE)

(72) Erfinder: Schwaab, Josef, Dr.
Rieslingweg 8
D-6735 Maikammer(DE)

(72) Erfinder: Siebel, Peter, Dr.
Trifelsring 20
D-6703 Limburgerhof(DE)

(54) Verfahren zur Herstellung von schlagfesten thermoplastischen Formmassen.

(57) Die Erfindung betrifft ein Verfahren zur Herstellung von schlagfesten thermoplastischen Formmassen durch Polymerisieren von mindestens einem Monomeren aus der Gruppe der konjugierten Diolefine mit 4 bis 5 C-Atomen, und der Acrylester von Alkoholen mit 1 bis 8 C-Atomen in Gegenwart von Wasser und unter Verwendung von Emulgatoren, sowie Initiatoren zu einem Kautschuklatex. Dieser Latex wird, z.B. durch Zugabe einer Acrylesterpolymerisatdispersion oder einer Polyvinyletherdispersion, derart agglomeriert, daß eine mittlere Teilchengröße ($d_{50}$-Wert der integralen Masseverteilung) von 0,20 bis 0,65 µm erhalten wird.

Nach der Agglomeration schließt sich eine (Pfropf)polymerisation an, wobei die Monomeren Styrol, Acrylnitril, Methylmethacrylat, in Emulsion auf den agglomerierten Kautschuklatex gepfropft werden. Kennzeichnend für das in Rede stehende Verfahren ist die Verwendung von Kaliumsalzen von gesättigten oder ungesättigten Fettsäuren mit 10 bis 30 C-Atomen als Emulgator.

EP 0 062 901 A2

Verfahren zur Herstellung von schlagfesten thermoplastischen
Formmassen

Die Erfindung betrifft ein Verfahren zur Herstellung von
schlagfesten thermoplastischen Formmassen, vorzugsweise von
ASA- und ABS-Polymerisaten, durch Pfropfpolymerisation unter
Verwendung eines agglomerierten, in Emulsion hergestellten
Kautschuklatex.

Zum Stand der Technik nennen wir:
(1)   DE-AS 24 27 960
(2)   DE-AS 12 47 665
(3)   DE-AS 12 69 360
(4)   DE-AS 13 00 241 und
(5)   DE-AS 12 92 850

Kautschuklatices, die bei der üblichen Homo- oder Mischpolymerisation von z.B. Butadien in Emulsion anfallen, haben
Teilchendurchmesser in der Größenordnung von etwa 0,02 bis
0,15 um. ABS- und ASA-Polymerisate, die mit solchen Kautschuken hergestellt werden, zeigen eine verhältnismäßig geringe Zähigkeit. Es ist nun bekannt, daß ABS-Polymerisate mit günstigeren Eigenschaften erhalten werden
können, wenn man bei der Pfropfpolymerisation Kautschuklatices mit größeren Teilchen einsetzt.

In (2) bzw. (3) sind Butadienpolymerisatlatices beschrieben,
die Teilchengrößen von 0,15 bis 0,6 um bzw. einen Latexteilchendurchmesser von mehr als 0,3 um aufweisen. In diesen
Druckschriften werden auch Angaben darüber gemacht, wie
solche grobteiligen Latices erhalten werden, beispielsweise
durch Polymerisation in konzentrierter Emulsion, durch Verwendung kleinerer Emulgatormengen oder durch Staffelung der
Emulgatorzugabe. Diese direkten Polymerisationsverfahren
zur Herstellung grobteiliger Latices haben jedoch den Nach-
Ko/P

teil, verhältnismäßig langer Polymerisationszeiten:
Es dauert im allgemeinen einige Tage, bis praktisch vollständiger Umsatz erreicht ist.

Eine andere, direkte Methode zur Herstellung grobteiliger
Latices wird in (3) empfohlen. Danach sollen während der
Polymerisation weitere Monomere zugesetzt werden. Auch hier
sind lange Polymerisationszeiten erforderlich.

Eine indirekte Methode zur Herstellung grobteiliger Latices
besteht darin, einem feinteiligen Kautschuklatex Elektrolyte zuzusetzen und dadurch die Teilchen zu vergrößern,
vgl. (5). Nach diesem Verfahren findet die Agglomeration
während der Pfropfung statt. Es ist mit zwei Nachteilen
behaftet: wegen der Koagulationsgefahr muß man größere
Mengen Emulgator zusetzen, was bei der anschließenden
Fällung zu Störungen führen kann. Außerdem bleiben die zugegebenen Ionen teilweise im Produkt enthalten und können bei
der Verarbeitung zu Korrosion führen und eine Verfärbung
des Produktes bewirken. Darüber hinaus sind in (1) eine
Reihe von physikalischen Methoden der Agglomeration, z.B.
die Gefrier- oder Scheragglomeration, sowie von weiteren
chemischen Methoden z.B. die Agglomeration mit Polymerdispersionen auf Basis von Polyvinyläthern zum Stand der
Technik genannnt.

In (1) ist ein Verfahren zur Herstellung von grobteiligen
Suspensionen beschrieben, wobei die Agglomeration durch
Zugabe einer Acrylesterpolymerisat-Dispersion zum Kautschuklatex vorgenommen wird. Nachteil dieses Verfahrens ist, daß
verhältnismäßig viel Koagulat nach der Pfropfpolymerisation
anfällt.

Der Erfindung lag also die Aufgabe zugrunde, ein Verfahren zu entwickeln, nach dem in einfacher und auch in großtechnischem Maßstab wirtschaftlich durchführbarer Weise die Teilchen eines Kautschuklatex ganz oder teilweise agglomeriert werden, mit dessen Hilfe ABS- bzw. ASA-Polymerisate mit einer ausgewogenen Eigenschaftskombination hinsichtlich Zähigkeit, Fließfähigkeit und Oberflächenglanz erhalten werden, wobei die Koagulatmenge bei der Dispersionsherstellung reduziert ist und eine gute Verarbeitung gewährleistet ist.

Diese Aufgabe wird durch die im Patentanspruch 1 genannten Maßnahmen gelöst.

Herstellung des Kautschuklatex (I):

Zunächst wird durch Polymerisation ein Kautschuklatex auf herkömmliche Weise hergestellt. Der dem Latex zugrundeliegende Kautschuk ist durch seine Glastemperatur definiert, die unterhalb von $-20^\circ$C, vorzugsweise unterhalb von $-40^\circ$C liegen soll. Als Monomeres der Gruppe (a) [Diene mit 4-5 C-Atomen] wird vorzugsweise Butadien allein verwendet. Da für manche Zwecke Butadien/ Acrylester-Kautschuke Vorteile zeigen, können auch Monomeren-Gemische aus Butadien und Acrylester der Gruppe (b) eingesetzt werden, die vorzugsweise zwischen 30 und 70 Gewichtsprozent, bezogen auf das Gemisch, Acrylester enthalten. Als Monomere der Gruppe b) werden bevorzugt Acrylester angewendet, die sich von Alkoholen mit 1 bis 8 Kohlenstoffatomen herleiten, wie Äthylacrylat, Butylacrylat oder Äthylhexylacrylat. Diese Acrylester können gegebenenfalls zusammen mit bis zu 10 Gew.% üblichen, vernetzend wirkenden bifunktionellen Monomeren (d) verwendet werden. Daraus werden dann die witterungsbeständigeren ASA-Polymerisate hergestellt. Gegebenenfalls können zusammen mit (a) oder (b) jeweils noch bis zu 30 Gew.% an Comonomeren (c) bei der Polymerisation anwesend sein, wie Isopren, Styrol, Acryl-

ⁿnitril oder Vinylether.

Die Polymerisation wird, wie üblich, bei Temperaturen 30 und 90°C durchgeführt, in Gegenwart von Kaliumsalzen von langkettigen Fettsäuren mit 10 bis 30 Kohlenstoffatomen, vorzugsweise mit 12-20 Kohlenstoffatomen als Emulgatoren (e). Es kommen somit beispielsweise in Frage: Kaliumlaurat, Kaliumpalmitat, Kaliumoleat, Kaliumstearat oder deren Gemische. Besonders bevorzugt ist Kaliumoleat.

Die Emulgatoren werden in Mengen von 0,3 bis 5, insbesondere von 0,5 bis 2,0 Gew.%, bezogen auf die Monomeren, verwendet. Es werden die üblichen Puffersalze, wie Natriumbicarbonat und Natriumpyrophosphat, verwendet.

Ebenso werden die üblichen Initiatoren (f), wie Persulfate oder organische Peroxide mit Reduktionsmitteln verwendet, sowie gegebenenfalls Molekulargewichtsregler, wie Mercaptane, Terpinole oder dimeres α-Methylstyrol, die am Anfang oder während der Polymerisation zugegeben werden. Das Gewichtsverhältnis Wasser zu Monomere liegt vorzugsweise zwischen 2 : 1 und 1 : 1. Die Polymerisation wird so lange fortgesetzt, bis mehr als 90 %, vorzugsweise mehr als 96 % der Monomeren polymerisiert sind. Dieser Umsatz ist im allgemeinen nach 4 bis 20 Stunden erreicht. Der dabei erhaltene Kautschuklatex hat in der Regel eine Teilchengröße von vorzugsweise von 0,02 bis 0,10 um. Durch dem Fachmann geläufige Methoden (z.B. Saatfahrweise) können auch mittlere Teilchengrößen von bis zu 0,2 oder 0,3 um erzielt werden. Bei dieser Maßangabe handelt es sich um den $d_{50}$-Wert der integralen Massenverteilung, der beispielsweise mit Hilfe der Ultrazentrifuge oder durch Auszählung elektronenmikroskopischer Aufnahmen bestimmt werden kann. Die Teilchengrößenverteilung solcher Kautschuklatices ist verhältnismäßig eng, so daß man von einem nahezu monodispersen System sprechen kann.

Agglomeration (II):

Danach wird der Kautschuklatex vorzugsweise mittels Polymerdispersionen [(g); (h)] agglomeriert. Dies geschieht z.B. durch Zugabe einer Dispersion eines Acrylesterpolymerisates (g) oder von Polyvinylethern (h) gemäß DE-AS 11 15 462. Vorzugsweise werden Dispersionen von Copolymerisaten von Acrylestern von Alkoholen mit 1 bis 4 Kohlenstoffatomen angewendet, insbesondere Ethylacrylat, mit 0,1 bis 10 Gew.% wasserlösliche Polymerisate bildenden Monomeren, wie Acrylsäure, Methacrylsäure, Acrylamid oder Methacrylamid, N-Methylolmethacrylamid oder N-Vinylpyrrolidon. Besonders bevorzugt ist ein Copolymerisat aus 96 % Ethylacrylat und 4 % Methacrylamid. Die Agglomerierdispersion kann gegebenenfalls auch mehrere der genannten Acrylesterpolymerisate enthalten.

Die Konzentration der bevorzugt angewendeten Acrylesterpolymerisate in der Dispersion soll im allgemeinen zwischen 3 und 40 Gew.% liegen. Bei der Agglomeration werden 0,2 bis 20, vorzugsweise 1 bis 5 Gewichtsteile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Unter den genannten Bedingungen wird nur ein Teil der Kautschukteilchen agglomeriert, so daß eine bimodale oder breite Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der mittlere Durchmesser der Kautschukteilchen ($d_{50}$-Wert der integralen Massenverteilung) liegt zwischen 0,1 und 0,65 um, vorzugsweise zwischen 0,20 und 0,40 um. Der erhaltene agglomerierte Kautschuklatex ist verhältnismäßig stabil, so daß er ohne weiteres gelagert und transportiert werden kann, ohne daß Koagulation eintritt.

Nach der Agglomeration können zum agglomerierten Latex gegebenenfalls noch bis zu 2,5 Gew.%, bezogen auf den Feststoffanteil, eines Kaliumsalzes einer langkettigen Carbonsäure als Emulgator hinzugegeben werden.

(Pfropf)polymerisation (III):

Der nächste Schritt ist die Pfropfpolymerisation. Diese wird in wäßriger Emulsion unter den üblichen, oben aufgeführten Bedingungen durchgeführt. Es werden 20 bis 90 Gewichtsteile Styrol, Acrylnitril, Methylmethacrylat oder Gemische von zwei oder allen dreien dieser Monomeren, in Gegenwart von 80 bis 10 Gewichtsteilen des agglomerierten Kautschuklatex, bezogen auf Feststoff, polymerisiert. Gegebenenfalls kann die Pfropfpolymerisation unter Mitverwendung von vernetzend wirkenden Monomeren durchgeführt werden. Vorzugsweise werden zwischen 25 und 45 Gew.% eines Gemisches von Styrol und Acrylnitril im Gewichtsverhältnis 88 : 12 bis 65 : 35 auf 75 bis 55 Gew.% Kautschuk gepfropft. Bei sehr niedrigem Monomeren : Kautschuk-Verhältnis werden nahezu alle Monomeren als Seitenketten chemisch mit dem Grundkautschuk verbunden; wird das Verhältnis größer als etwa 50 : 50, so polymerisiert ein erheblicher Teil der Monomeren separat.

Bei der bevorzugten Ausführungsform, bei der nur wenig Monomere gepfropft werden, entsteht ein Pfropfpolymerisat, das selbst noch kautschukartige Eigenschaften hat. Dieses Pfropfpolymerisat wird im folgenden als Weichkomponente bezeichnet. Es kann aus der Dispersion nach bekannten Methoden, z.B. durch Zugabe von Elektrolyten, ausgefällt, dann abgetrennt und getrocknet werden.

Die erfindungsgemäß erhaltenen Pfropfmischpolymerisate werden bevorzugt zur Herstellung von Abmischungen mit Polymerisaten bzw. Copolymerisaten verwendet.

Diese Polymerisate oder Copolymerisate werden als Hartkomponente bezeichnet. Weichphase und Hartkomponente ergeben dann die bekannten ABS- bzw. ASA-Formmassen.

Es ist aber auch möglich, Hart- und Weichkomponente in Dispersion zu vermischen, auszufällen und aufzuarbeiten. Eine weitere Möglichkeit besteht darin, die Dispersion der Weichkomponente nur teilweise zu entwässern und als feuchte Krümel in eine Schmelze der Hartkomponente einzuarbeiten, wie es in der DE-AS 2 037 784 beschrieben ist.

Die zur Abmischung mit den Pfropfmischpolymerisaten gemäß Erfindung erforderliche Hartkomponente kann ein Polymerisat von Styrol, α-Methylstyrol, Methylmethacrylat, Acrylnitril, Methacrylnitril, Vinylchlorid, oder von Gemischen von zwei oder mehreren dieser Monomeren sein. Für ABS-Polymerisate wird vorzugsweise ein Copolymerisat von 90 bis 60 Gew.% Styrol und 10 bis 40 Gew.% Acrylnitril verwendet. Beim Abmischen liegt z.B. das Gewichtsverhältnis Hartkomponente zu Weichkomponente zwischen 80 : 20 und 50 : 50. Der Gehalt der fertigen ABS-Formmasse an Grundkautschuk liegt vorzugsweise zwischen 5 und 30 Gew.%.

Die durch Abmischen erhaltenen Formmassen zeichnen sich durch eine abgestimmte Kombination von Schlagzähigkeit, auch bei tiefen Temperaturen, Oberflächenglanz, Fließfähigkeit und damit thermoplastischer Verarbeitbarkeit aus.

Die so erhaltenen Formmassen können die üblichen Zusatzstoffe, wie Füllstoffe, weitere Kunststoffe, Stabilisatoren, Antistatika, Weichmacher, Flammschutzmittel, Schmiermittel, Farbstoffe und Pigmente, vorzugsweise in Mengen von insgesamt etwa 30 % ihres Gewichtes, enthalten. Sie können durch Extrusion, Tiefziehen oder Spritzgießen zu Formkörpern verarbeitet werden.

Die in den Beispielen und Vergleichsversuchen genannten Parameter wurden wie folgt bestimmt:

1. Die Teilchengrößenverteilung des ungepfropften Kautschuklatex vor und nach der Agglomeration wurde mittels einer analytischen Ultrazentrifuge entsprechend der Methode von W. Scholtan und H. Lange, Kolloid-Z. und Z. Polymere 250 (1972), Seiten 782 bis 796, bestimmt. In allen Fällen wurde die dort beschriebene Korrektur der Meßwerte aufgrund des Verdünnungseffektes und des Mie-Effektes vorgenommen. Bei sehr kleinen Latex-Konzentrationen von etwa 0,5 bis 4 g/l erwies sich die Korrektur des Konzentrationseffektes als überflüssig. Die Ultrazentrifugenmessung liefert die integrale Massenverteilung des Latex-Teilchendurchmessers. Hieraus läßt sich entnehmen, wieviel Gew.% der Latex-Teilchen einen Durchmesser gleich oder kleiner einer bestimmten Größe haben. Der $d_{50}$-Wert der integralen Massenverteilung ist dabei als der Teilchendurchmesser definiert, bei dem 50 Gew.% der Latex-Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur weiteren Charakteri-

sierung der Teilchengrößenverteilung der Kautschuk-latices wurden neben dem $d_{50}$-Wert auch die $d_{10}$- und $d_{50}$-Werte bestimmt. Sie stellen ein Maß für die Verteilungsbreite dar. Der $d_{10}$- bzw. $d_{90}$-Wert der integralen Massenverteilung ist dabei entsprechend dem $d_{50}$-Wert definiert, nur mit dem Unterschied, daß er auf 10 bzw. 90 Gew.% der Latex-Teilchen bezogen ist.

2.  Die Koagulatmenge wurde nach der Pfropfpolymerisation wie folgt bestimmt: Die Dispersion des Pfropfpolymerisates wird über ein Sieb mit Lochblende von 3 mm Durchmesser abfiltriert. Der grobkörnige Rückstand wird im Vakuum bei 1 Torr und 80°C getrocknet und dann ausgewogen.

Die in den Beispielen und Vergleichsversuchen genannten Teile und Prozente beziehen sich auf das Gewicht.

Beispiel 1

In einem für 10 atü ausgelegten V2A-Stahlkessel mit Blattrührer wurden die folgenden Produkte vorgelegt:

    150      Teile Wasser
      1,2    Teile Kaliumoleat
      0,3    Teile Kaliumpersulfat
      0,3    Teile Natriumbicarbonat
      0,15   Teile Natriumpyrophosphat

Zur Entfernung des Sauerstoffs wurde der Kessel zweimal mit Stickstoff gespült und die Lösung dann in Stickstoff-Atmosphäre auf 65°C erhitzt. Darauf wurden der Lösung 0,5 Teile tert.-Dodecylmercaptan und 16,6 Teile Butadien zugeführt. Eine Stunde nach Polymerisationsbeginn wurden weitere 83,3 Teile Butadien innerhalb von 5 Stunden zudosiert.

5 Stunden nach Beendigung der Butadien-Zugabe, d.h. nach insgesamt 11 Stunden, wurden nochmals 0,5 Teile tert.-Dodecylmercaptan zugegeben. Nach einer Reaktionszeit von insgesamt 19 Stunden wurde bei einem Umsatz von 96 % eine Polybutadien-Emulsion mit einem Feststoffgehalt von 39,2 %, bezogen auf die Emulsion, erhalten. Der Polybutadien-Latex hatte eine Glastemperatur von ca. -80°C. 255 Teile der Polybutadien-Emulsion wurden bei 65°C mit 74 Teilen Wasser verdünnt. Zur Agglomeration des Latex wurden 30 Teile einer wäßrigen Dispersion eines Ethylacrylat-Copolymeren zudosiert, das 96 Gew.% Ethylacrylat und 4 Gew.% Methacrylamid einpolymerisiert enthielt. Der Feststoffgehalt dieser Dispersion betrug 10 Gew.%, bezogen auf die Dispersion.

Die so erhaltene Polybutadien-Emulsion wurde auf 70°C aufgeheizt und bei dieser Temperatur mit 0,13 Teilen Kaliumpersulfat (in Form einer 3 %igen, wäßrigen Lösung), 0,02 Teilen tert.-Dodecylmercaptan und 11 Teile eines Gemisches von Styrol und Acrylnitril versetzt. Das Gewichtsverhältnis von Styrol zu Acrylnitril in diesem Gemisch betrug 7 : 3. 10 Minuten nach Beginn der Pfropfreaktion wurde innerhalb von 2 3/4 Stunden ein Gemisch aus weiteren 39 Teilen Styrol, 17 Teilen Acrylnitril und 0,1 Teilen tert.-Dodecylmercaptan zudosiert. Dabei stellte sich eine Reaktionstemperatur von 75°C ein. Nach Beendigung der Monomerenzugabe wurde die Reaktion noch eine Stunde fortgesetzt. Nach dem Abkühlen der Dispersion auf 30 bis 40°C wurde über ein Sieb abgelassen. Die Koagulatmenge lag bei 0,4 Teilen. Das entstandene Pfropfpolymerisat wurde dann mittels einer Calciumchlorid-Lösung bei 95°C gefällt und abgesaugt. Die feuchten Krümel des gepfropften Polybutadiens wurde mittels eines Extruders in die Schmelze eines Styrol/Acrylnitril-Copolymeren eingearbeitet, das 65 Gew.% Styrol und 35 Gew.% Acrylnitril einpolymerisiert enthielt.

Beispiel 2

4,5 Teile Vinylmethylether, 9,5 Teile Acrylsäurebutylester und 6,5 Teile Butadien wurden in 150 Teilen Wasser unter Zusatz von 1,2 Teilen des Kaliumoleat, 0,3 Teilen Kaliumpersulfat, 0,3 Teilen Natriumbicarbonat und 0,15 Teilen Natriumpyrophosphat unter Rühren auf 65°C erwärmt. Nach dem Anspringen der Polymerisationsreaktion wurde innerhalb von 5 Stunden eine Mischung aus weiteren 47,5 Teilen Acrylsäurebutylester und 32 Teilen Butadien zugegeben. Nach Beendigung der Monomerenzugabe wurde die Polymerisationsreaktion noch zwei Stunden bei 65°C fortgesetzt und die Emulsion dann abgekühlt. Der Feststoffgehalt der Emulsion betrug 38,4 %. Der entstandene Kautschuk-Latex hatte eine Glastemperatur von ca. -55°C und eine enge Teilchengrößenverteilung, die durch folgende Werte charakterisiert ist:

$d_{10}$-Wert:    0,070 /um
$d_{50}$-Wert:    0,090 /um
$d_{90}$-Wert:    0,115 /um

Zu 25 Teilen dieser Emulsion wurden bei 23°C unter Rühren 2,9 Teile einer wäßrigen Dispersion eines Ethylacrylat-Copolymeren zugemischt, das 96 Gew.% Ethylacrylat und 4 Gew.% Methacrylamid einpolymerisiert enthielt. Der Feststoffgehalt dieser Agglomerier-Dispersion betrug 10 Gew.%. Die Agglomeration war nach einer Stunde beendet. Der teilweise agglomerierte Kautschuk-Latex wies eine breite Teilchengrößenverteilung mit leicht bimodalem Charakter mit folgenden charakteristischen Werten auf:

$d_{10}$-Wert:    0,115 /um
$d_{50}$-Wert:    0,310 /um
$d_{90}$-Wert:    0,590 /um

Die so erhaltene Emulsion wurde mit 7,5 Teilen Wasser gemischt und auf 65°C aufgeheizt. Danach wurden unter Stickstoff 0,019 Teile Kaliumpersulfat (als 3 %ige, wäßrige Lösung), 0,006 Teile tert.-Dodecylmercaptan, 1,1 Teile Styrol und 0,5 Teile Acrylnitril zugegeben. 15 Minuten nach Start der Pfropfpolymerisation wurde innerhalb von 1,5 Stunden ein Gemisch aus weiteren 3,4 Teilen Styrol, 1,4 Teilen Acrylnitril und 0,019 Teilen tert.-Dodecylmercaptan zudosiert. Nach Beendigung der Monomeren-Zugabe wurde die Pfropfreaktion noch 1,5 Stunden weitergeführt. Nach dem Abkühlen der Dispersion auf 30 bis 40°C wurde über ein Sieb abgelassen. Die Coagulatmenge lag bei 0,08 Teilen.

Das entstandene Pfropfpolymerisat wurde dann mittels einer Calciumchloridlösung gefällt, abgesaugt und im Vakuum bei 60°C getrocknet. Das so erhaltene Pfropfpolymerisat wurde in einem Extruder bei 260°C mit einem Styrol/Acrylnitril-Copolymeren (65 : 35) gemischt.

Beispiel 3

16 Teile Acrylsäurebutylester und 0,33 Teile Dicyclopentadienylacrylat wurden in 150 Teilen Wasser unter Zusatz von 1,2 Teilen Kaliumoleat, 0,3 Teilen Natriumpersulfat, 0,3 Teilen Natriumbicarbonat und 0,15 Teilen Natriumpyrophosphat unter Rühren auf 60°C in einer Stickstoffatmosphäre erwärmt. 10 Minuten nach dem Anspringen der Polymerisationsreaktion wurde innerhalb von 3 Stunden eine Mischung aus weiteren 82 Teilen Acrylsäurebutylester und 1,67 Teilen Dicyclopentadienylacrylat zugegeben. Eine Stunde vor Beendigung der Monomerenzugabe wurden dem Reaktionsgemisch gleichzeitig 7,7 Teile einer wäßrigen Dispersion eines Ethylacrylat-Copolymeren zugemischt, das 96 Gew.% Ethylacrylat und 4 Gew.% Methacrylamid einpolymerisiert enthielt. Der Feststoffgehalt dieser Agglomerier-Dispersion betrug 10 Gew.%. Nachdem die Monomerenzugabe beendet war, wurde die Polymerisation noch zwei Stunden bei 60°C weitergeführt. Dabei wurde eine Polybutylacrylat-Emulsion mit einem Feststoffgehalt von 39,5 % gebildet. Der bereits teilweise agglomerierte Latex hatte eine Glastemperatur von ca. $-40^{\circ}C$ und eine bimodale Teilchengrößenverteilung, die durch folgende Werte charakterisiert ist:

$d_{10}$-Wert:  0,120 um

$d_{50}$-Wert:  0,160 um

$d_{90}$-Wert:  0,365 um

100 Teile der so erhaltenen Emulsion wurden mit 39 Teilen Wasser gemischt und auf $60^{\circ}C$ erhitzt. Danach wurden unter Stickstoff 0,08 Teile Kaliumpersulfat (als 3 %ige, wäßrige Lösung), 0,01 Teile Lauroylperoxyd, 3 Teile Styrol und 1,0 Teile Acrylnitril zugemischt. 15 Minuten nach Start der Pfropfpolymerisation wurde innerhalb von 2 Stunden ein Gemisch aus weiteren 16 Teilen Styrol, 5,5 Teilen Acrylnitril und 0,04 Teilen Lauroylperoxyd zudosiert. Nach Beendigung der Monomerenzugabe wurde die Pfropfreaktion noch 2 Stunden weitergeführt. Nach dem Abkühlen der Dispersion auf 30 bis $40^{\circ}C$ wurde über ein Sieb abgelassen. Die Coagulatmenge lag bei 0,4 Teilen.

Das entstandene Pfropfpolymerisat wurde dann mittels einer Calciumchloridlösung bei $95^{\circ}C$ gefällt und getrocknet.

Vergleichsversuche

Es wurden Polymerlatices analog Beispiel 1 A; 2 A und 3 A der DE-AS 24 27 960 hergestellt. Nach der Pfropfpolymerisation wurden dabei bei 1 A 1,2; bei 2 A 0,23 und 3 A 0,13 Teile Koagulat gefunden.

Patentansprüche

1. Verfahren zur Herstellung von schlagfesten thermoplatischen Formmassen durch

I Polymerisieren von mindestens einem Monomeren aus
der Gruppe

(a) der konjugierten Diolefine mit 4 bis 5 C-Atomen oder

(b) der Acrylester von Alkoholen mit 1 bis 8
C-Atomen
gegebenenfalls in Gegenwart von

(c) Comonomeren zu a) oder b)
oder von

(d) vernetzend wirkenden Monomeren
in Gegenwart von Wasser und unter Verwendung
von

(e) mindestens einem Emulgator, sowie

(f) mindestens einem Initiator
zu einem Kautschuklatex [mit einer mittleren Teilchengröße ($d_{50}$-Wert der integralen Masseverteilung) im Bereich von 0,02 bis 0,15 µm]

II Zugabe mindestens eines chemisch wirkenden Agglomeriermittels aus der Gruppe

(g) der Acrylesterpolymerisatdispersionen oder
der

(h) Polyvinyletherdispersionen,
derart, daß eine mittlere Teilchengröße ($d_{50}$-Wert
der integralen Masserverteilung) von 0,20 bis
0,65 µm erhalten wird, und

0062901

III (Pfropf)polymerisieren von
20 bis 90 Gew.% mindestens eines Monomeren aus der Gruppe Styrol, Acrylnitril, Methylmethacrylat, gegebenenfalls unter Mitverwendung von vernetzend wirkenden Monomeren, in Gegenwart von
80 bis 10 Gew.% des agglomerierten Kautschuklatex aus Stufe II, bezogen auf Feststoff, <u>dadurch gekennzeichnet</u>, daß man als Emulgator (e), Kaliumsalze aus der Gruppe der gesättigten oder ungesättigten Fettsäuren mit 10 bis 30 C-Atomen, verwendet.

2. Verwendung der Pfropfmischpolymerisate gemäß Anspruch 1 zur Herstellung von Abmischungen mit Hartkomponenten.